# EUROPÄISCHE PATENTANMELDUNG

(11) **EP 4 375 536 A1**
(43) Veröffentlichungstag der Anmeldung: **29.05.2024**
(21) Anmeldenummer: 23209955.6
(22) Anmeldetag: 15.11.2023
(51) Int. Cl.: F16G 15/12, F16G 13/12

(54) **KETTE**

(30) Priorität: 22.11.2022 DE 202022106514 U
(71) Anmelder: J.D. Theile GmbH & Co. KG, D-58239 Schwerte (DE)
(72) Erfinder: WIRTZ, Jörg, 58239 Schwerte (DE); MÜER, Bernd, 58239 Schwerte (DE)
(74) Vertreter: Haverkamp Patentanwälte PartG mbB

(57) **Zusammenfassung**

Die Erfindung betrifft eine Kette 1, umfassend ein Horizontalkettenglied 2, ein Vertikalkettenglied 3 und jeweils zwei einander gegenüberliegende Buge 5, 5.1, 14, 14.1, sodass die Kettenglieder 2, 3 jeweils in sich geschlossene Verläufe 6 bilden, wobei das Horizontalkettenglied 2 an zumindest einem Bug 5, 5.1 einen Funktionsabschnitt 16, 16.1, 16.2, 16.3 aufweist, der in einer Sperrebene 17 so ausgestaltet ist, dass er durch das zu dem Horizontalkettenglied 2 angeordnete Vertikalkettenglied 3 nicht hindurchtauchen kann und eine Weite 18 aufweist, die schmaler ist als die innere Breite des Vertikalkettengliedes 3, sodass er durch das Vertikalkettenglied 3 hindurchtauchen kann.

Besonderes Kennzeichen ist, dass das Horizontalkettenglied 2 einen inneren Abstützabschnitt 19 und an dem Funktionsabschnitt 16, 16.1, 16.2, 16.3 eine äußere, um den Verlauf 6 des Horizontalkettengliedes 2 führende Abstützbahn 21 bereitstellt, entlang welcher das Vertikalkettenglied 3 zumindest abschnittsweise aus der Verklankungsanordnung durch ein Drehen um den Verlauf 6 des Horizontalkettengliedes 2 in seine Zuganordnung gleiten kann und welche Abstützbahn 21 in Abstützbahnrichtung um mindestens 90° + arctan µ gegenüber der Richtung der Schenkellängserstreckung 10 geneigt ist, wobei µ der Reibbeiwert der Kettenglieder 2, 3 im Bereich der Abstützbahn 21 ist, sodass sich das Vertikalkettenglied 3 von der Verklankungsansordnung so um das Horizontalkettenglied 2 dreht, dass es sich mit der Richtung der inneren Breite 7 parallel zur Richtung der Weite 18 des Funktionsabschnittes 16, 16.1, 16.2, 16.3 ausrichtet, sodass dieser durch das Vertikalkettenglied 3 hindurchtaucht und das Vertikalkettenglied 2 in seine Zuganordnung gelangt.

## Beschreibung

Die Erfindung betrifft eine Kette mit den Merkmalen des Oberbegriffes des Anspruchs 1.

Eine Kette umfasst eine Vielzahl an Kettengliedern, die ineinander eingehängt sind. Die Kettenglieder weisen zwei gegenüberliegende Schenkel und die beiden Schenkel verbindende Buge auf, sodass durch jedes Kettenglied ein geschlossener Verlauf gebildet ist.

Eine Kette ist für eine Vielzahl von Anwendungsfällen einsetzbar. Ketten können auf Zug belastet werden und dienen etwa dem Abspannen von Gegenständen oder werden als Trieb in einem Förderer eingesetzt. In einem Förderer sind üblicherweise zwei parallellaufende Ketten angeordnet, wobei zwischen den beiden Ketten Stege vorgesehen sind, die ein auf einer Bahn, etwa einer Förderrinne aufliegendes Material schieben und so fortbewegen. Hier eingesetzte Ketten sind Endlosketten; die Ketten werden an den Enden der Bahn umgelenkt.

Problematisch ist, wenn keine Zugkraft auf der Kette bzw. einem Kettenteil lastet, etwa bei der Lagerung oder im Kettentrum. Dann können die Kettenglieder ineinander eintauchen. Es besteht die Möglichkeit, dass ein Kettenglied entlang des Schenkels eines anderen Kettengliedes entlanggleitet, sodass das eine Kettenglied das andere Kettenglied nicht im Bereich seines Bugs kontaktiert, sondern im Bereich seines Schenkels. Dies kann zu einer sich festsetzenden Verklankungsanordnung führen, in der die beiden Kettenglieder in einer nichtbestimmungsgemäßen Anordnung Lasten übertragen. Eine bestimmungsgemäße Anordnung - die Zuganordnung - ist dagegen dann gegeben, wenn die beiden Buge der Kettenglieder ineinandergreifen, um eine bestimmungsgemäße Zugkrafteinleitung in die jeweiligen Kettenglieder zu gewährleisten.

Zum Einbringen der Zugkraft in eine Kette werden üblicherweise Kettenräder genutzt, die mit einem Drehmoment beaufschlagt werden. Ein Kettenrad verfügt über zu den Kettengliedern komplementäre Kettentaschen, in denen jeweils ein einzelnes Kettenglied eingeführt wird und in denen das Kettenglied in Zugrichtung formschlüssig gehalten ist. Durch die rotatorische Bewegung des Kettenrades wird das in der Kettentasche gehaltene Kettenglied entlang des Umfanges des Kettenrades bewegt und dadurch die Kette insgesamt auf Zug belastet.

Um eine möglichst große Zugkraft über eine Kette übertragen zu können, sind die einzelnen Kettenglieder möglichst massiv ausgebildet und weisen hierfür entsprechende Nenndicken auf. Es hat sich gezeigt, dass besonders Ketten mit wechselweise angeordneten Horizontal- und Vertikalkettengliedern, die in ihrer Ausrichtung entsprechend ihrer Bezeichnung im Wesentlichen Senkrecht zueinander ausgerichtet sind, geeignet sind, große Kräfte aufzunehmen.

Um eine leistungsstarke und gleichzeitig leichtgewichtige Kette zur Verfügung zu stellen, muss bezogen auf ein Kettenglied möglichst viel kräfteaufnehmendes Material auf kleinem Raum vorgesehen werden. Hierfür ist es notwendig, die innere Breite der jeweiligen Kette nur so weit auszugestalten, dass das in das Kettenglied eingreifende Kettenglied gerade mit seiner Höhe darin Platz findet, sodass die Breite eines Kettengliedes möglichst klein ist.

Dann besteht jedoch regelmäßig ein Problem beim Einleiten der Kräfte ausgehend von der Kettentasche des Kettenrades in das jeweilige Kettenglied (üblicherweise das Horizontalkettenglied): Die Druckkraft kann in das Horizontalkettenglied nur seitlich des eingreifenden Vertikalkettengliedes eingebracht werden. Daher besteht üblicherweise nur wenig Raum zum Einleiten der Kräfte. Darüber hinaus weist das Kettenglied in diesem Bereich üblicherweise einen Bogen auf, sodass eine in Schenkellängserstreckungsrichtung aufgebrachte Kraft aufgrund der bogenimmanenten schrägen Einleitung immer nur zu einem Teil in Schenkellängserstreckungsrichtung eingebracht wird; der andere Teil wird als Schubkraft übertragen.

Hinzuweisen ist darauf, dass auch wenn in diesem Zusammenhang davon ausgegangen wird, dass die Kraftleitung vom Kettenrad auf das Horizontalkettenglied erfolgt, hierauf die Erfindung nicht beschränkt ist. Auch ist es für die nachstehenden Ausführungen nicht von Relevanz, ob das Horizontalkettenglied in der Horizontalen und das Vertikalkettenglied in der Vertikalen angeordnet ist; ein Vertauschen der Ausrichtungen ist problemlos denkbar. Die Begriffe werden lediglich der besseren Verständlichkeit genutzt.

Um die Flächenpressung beim Einleiten der Kräfte ausgehend von der Kettentasche in das Kettenglied gering zu halten, sind sogenannte Pfeilzahnketten entwickelt worden. Solche Kettenglieder sind etwa in DE 196 10 935 A1 offenbart. Ziel der Pfeilzahnketten ist es, die Schubflächen zur Krafteinleitung statt als Punktkontakt, wie er üblicher Weise bei Rundbögen gegeben wäre, als Linienkontakt auszugestalten. Hierfür verfügt das Horizontalkettenglied über die Buge verdickende Funktionsabschnitte, die pfeilförmig angeformt sind.

Eine diesbezügliche Weiterentwicklung offenbaren US 2011/0272253 A1 und US 2011/0127146 A1. Hier sind die Funktionsabschnitte nicht mehr pfeilförmig, sondern orthogonal zu den Schenkeln des Kettengliedes ausgerichtet.

Den genannten Ausgestaltungen der Kettenglieder ist gemein, dass sie der Erstreckung der Schenkel des entsprechend ausgestalteten Horizontalkettengliedes folgende Funktionsabschnitte aufweisen. Diese Funktionsabschnitte sind in einer Ebene so ausgestaltet, dass sie durch das eingreifende, in einer bestimmten Ausrichtung angeordnete Vertikalkettenglied nicht hindurchtauchen können. Diese Ebene, die das Eintauchen blockiert, wird nachstehend als Sperrebene bezeichnet. Die Funktionsabschnitte sind in dieser Sperrebene etwa dicker als die innere Breite des Vertikalkettengliedes. Auch kann vorgesehen sein, dass die lokale Dicke im Funktionsabschnitt nicht vergrößert ist, jedoch durch angrenzendes Material das Vertikalkettenglied trotzdem blockiert ist. Die Funktionsabschnitte sind bezogen auf die Schenkellängserstreckung im Bereich des Buges angeordnet; sie schließen sich somit an den zu dem Bug weisenden Teil des Schenkels an.

Anderseits sind die Funktionsabschnitte so ausgestaltet, dass sie durch das Vertikalkettenglied in einer zweiten Ausrichtung hindurchtauchen können; der Funktionsabschnitt weist hierfür eine Weite auf, die schmaler ist als die innere Breite des zweiten Kettengliedes. Die angesprochene Weite liegt in den genannten Offenbarungen in Höhenrichtung des Horizontalkettengliedes. Auf diese Weise kann das Vertikalkettenglied in der durch die Breite und die Teilung des Horizontalkettengliedes aufgespannte Ebene gegenüber dem Horizontalkettenglied verschwenkt werden; ist das Vertikalkettenglied jedoch gegenüber dieser Ebene verkippt, blockiert die Sperrebene des Funktionsabschnittes ein vollständiges entlangleiten entlang des Verlaufs des Horizontalkettengliedes.

Um zu unterbinden, dass in einer nicht bestimmungsgemäßen Anordnung das Vertikalkettenglied in das Horizontalkettenglied eintaucht und somit um den Verlauf des Horizontalkettengliedes verdreht wird - und ein Zurückgleiten durch den Funktionsabschnitt dann verhindert ist - verfügen die offenbarten Ketten über einen Verklankungsschutz, ausgebildet durch nach au-ßen weisende Nasen, die den Durchmesser der Schenkel des Horizontalkettengliedes künstlich so stark vergrößern, dass diese in ihrem Durchmesser größer sind als die innere Breite des Vertikalkettengliedes. Auf diese Weise ist ein Anschlag bereitgestellt, der verhindert, dass das Vertikalkettenglied um den Verlauf des Horizontalkettengliedes verdreht werden kann und in das Horizontalkettenglied eintauchen könnte, eine Verklankungsanordnung provozierend.

Nachteilig bei diesen Ausgestaltungen ist, dass die Kettenglieder aufgrund des zusätzlich notwendigen Materials für die künstliche Verdickung der Schenkel verhältnismäßig schwer sind. Vor diesem Hintergrund ist üblicherweise vorgesehen, nur abschnittsweise eine Verdickung der Schenkel vorzusehen. Dies impliziert jedoch mehr oder minder scharfkantige Taschen, in denen sich Schmutz oder - insbesondere, wenn die Kette in einem Förderer eingesetzt wird - gefördertes Material absetzt. Dieses Material führt üblicher Weise zu einem stark erhöhten Verschleiß des Kettenrades, respektive der Kettentaschen.

DE 2 247 300 A offenbart ein Kettenglied mit verbreiterten Schubflächen, die nasenförmig über die Außenseite der Schenkel hervorragen. Um einer Verklankungssituation entgegenzuwirken ist hier vorgesehen, dass das eingreifende Kettenglied in der Zugposition geführt ist.

Dies hat den Nachteil, dass eine - mittlerweile standardmäßig - geforderte Verschiebung der Kettenglieder in der Zugebene untereinander nicht ermöglicht wird.

Aufgabe der Erfindung ist es vor diesem Hintergrund, die vorstehend beschriebenen Ketten dahingehend weiterzubilden, dass diese leichter ausgebildet werden können und eine freie Bewegbarkeit gegeben ist.

Gelöst wird diese Aufgabe durch eine eingangs genannte, gattungsgemäße Kette mit den Merkmalen des Anspruchs 1.

Bevorzugte Ausgestaltungen ergeben sich aus den abhängigen Ansprüchen sowie der Beschreibung.

In Abkehr zum genannten Stand der Technik wird gemäß der Erfindung vorgeschlagen, eine Verklankungsanordnung zuzulassen und den Funktionsabschnitt des Horizontalkettengliedes so auszugestalten, dass das Vertikalkettenglied sich aus der Verklankungsanordnung heraus selbst entklanken kann, indem es aus der verklankten Position, den Schenkel des Horizontalkettengliedes umgreifend, sich eigenständig so dreht, dass es über den Funktionsabschnitt hinübergleiten kann. Zusätzliche Maßnahmen, wie das künstliche Verdicken der Schenkel zum Verhindern eines Eintauchens des Vertikalkettengliedes in das Horizontalkettenglied, sind somit nicht mehr notwendig.

Um eine eigenständige Drehung des Vertikalkettengliedes um den Verlauf des Horizontalkettengliedes herum zu ermöglichen, ist gemäß einer ersten Lösung vorgesehen, das Vertikalkettenglied in der Verklankungsanordnung einerseits an einem Abstützabschnitt innerhalb des Bugs des Horizontalkettengliedes abzustützen und andererseits eine Abstützbahn vorzusehen die - angepasst an das Vertikalkettenglied - in Abstützbahnrichtung um mindestens 90° + arctan (µ) gegenüber der Richtung der Schenkellängserstreckung ausgehend von dem Funktionsabschnitt geneigt ist, wobei µ der Reibbeiwert der beiden Kettenglieder im Bereich der Abstützbahn ist. Durch das Vorsehen einer geneigten Abstützbahn, deren Neigung wie vorbeschrieben definiert ist, wird die durch die Haftreibung begründete Selbsthemmung des Vertikalkettengliedes gegenüber dem Horizontalkettenglied überwunden; die in Abstützbahnrichtung weisende Hangabtriebskraft ist dann größer als die zwischen den beiden Kettengliedern herrschende Haftreibung. Der Reibbeiwert von üblichen Stahlkettengliedern liegt bei etwa 0,10 bis 0,15; entsprechend ergibt sich ein Neigungswinkel von etwa 7°. Hierdurch wird erreicht, dass das Vertikalkettenglied so abgestützt wird, dass es sich selbsttätig während des Entklankens entlang des Verlaufes des Horizontalgliedes herabschraubt.

Während der Abstützabschnitt im Bereich des Bugs - je nach Ausgestaltung der Kettenglieder - einen mehr oder minder großen Drehbereich des Vertikalkettengliedes darstellt, verläuft die außenseitige Abstützbahn entlang des äußeren Umfanges des Horizontalkettengliedes und führt somit um den Verlauf des Horizontalkettengliedes herum etwa um einen Winkel von bis zu 50°.

Man macht sich somit zunutze, dass je nach Ausrichtung des Vertikalkettengliedes zu dem Horizontalkettenglied das Vertikalkettenglied eine unterschiedlich große zur Verfügung gestellte Weite in Sperrebenenrichtung des Funktionsabschnittes aufweist. Ist die innere Breite in der Sperrebenen, ist die zur Verfügung gestellte Weite nur die innere Breite. Wird das Vertikalkettenglied um den Verlauf des Horizontalkettengliedes verschwenkt, vergrößert sich die zur Verfügung gestellte Weite bis maximal zur nutzbaren Teilung.

Inhärent kann das Horizontalkettenglied eine Abstützung nur bis zu einem bestimmten Drehwinkel ermöglichen, da sonst der Funktionsabschnitt nicht durch das Vertikalkettenglied tauchen könnte. Aufgrund der Vergrößerung der zur Verfügung stehenden Weite im Vertikalkettenglied während der Drehung einerseits und des begrenzten Abstützabstandes zwischen Abstützbahn und Abstützbereich seitens des Horizontalkettengliedes andererseits vollführt das Vertikalkettenglied während des Drehens eine Nickbewegung, somit eine Kippbewegung um seine Breitenachse.

Überlagert wird diese Nickbewegung durch eine Rollbewegung des Vertikalkettengliedes um seine Teilungsachse: Während die Abstützbahn in Abstützbahnrichtung geneigt ist, verändert der Abstützabschnitt seine Höhe üblicherweise nicht bzw. nicht wesentlich. Hierdurch verkleinert sich die zur Verfügung gestellte Weite des Vertikalkettengliedes. Durch die Stärke der Neigung der Abstützbahn kann somit zusätzlich auf denjenigen Drehwinkel, bis zu dem das Vertikalkettenglied an dem Horizontalkettenglied abgestützt ist, Einfluss genommen werden: Eine größere Verkippung des Vertikalkettengliedes verkleinert die zur Verfügung gestellte Weite.

Bevorzugt ist vorgesehen, dass das Vertikalkettenglied, während es sich von der Verklankungsanordnung in seine bestimmungsgemäße Anordnung dreht, an dem Horizontalkettenglied in Schenkellängserstreckungsrichtung lediglich an dem Abstützabschnitt und an der Abstützbahn abgestützt ist. Teil des Abstützabschnittes kann auch die Schenkelinnenseite des Horizontalkettengliedes sein. Auf diese Weise wird eine Zweipunktabstützung in Schenkellängserstreckungsrichtung bereitgestellt, sodass ein ungehemmtes Entlanggleiten des Vertikalkettengliedes an dem Horizontalkettenglied gewährleistet ist.

Grundsätzlich kann vorgesehen sein, dass die Abstützbahn nicht über ihre gesamte Erstreckung die für eine Vermeidung der Selbsthemmung erforderliche Neigung aufweist. Es kann Abschnitte geben, die eine geringere Neigung aufweisen. Dennoch kann auch dann die Lehre der Erfindung umsetzbar sein, und zwar dann, wenn die Drehung des Vertikalkettengliedes um den Verlauf des Horizontalkettengliedes bereits durch einen Abschnitt der Abstützbahn, der die mindesterforderliche Neigung aufweist, initiiert wurde und dadurch das Vertikalkettenglied bereits über eine gewisse Drehgeschwindigkeit verfügt. Dann kann ein Abschnitt der Abstützbahn, der eine geringere Neigung als die mindesterforderliche Neigung aufweist, durch die Massenträgheit des Vertikalkettengliedes überwunden werden.

Bevorzugt ist vorgesehen, dass die Abstützbahn knickfrei ist. Dies bedeutet nicht zwingenderweise, dass sie stetig sein muss, wenngleich dies bevorzugt ist. Knickfrei bedeutet im Kontext der Erfindung, dass die Neigung der Abstützbahn sich nicht abrupt ändert. Eine abrupte Änderung der Neigung ist bei einer Ausgestaltung beobachtbar, bei der ein abrupter Kontaktwechsel zwischen Horizontalkettenglied und Vertikalkettenglied gegeben wäre. Ein solcher ist unerwünscht, da er an dieser Stelle stets eine Punktbelastung gegeben wäre, die zum Abrieb von Material führen kann. Eine stetige Abstützbahn stellt zudem einen gleichmäßigen Entklankungsprozess sicher.

Zum Entklanken kann nach einer zweiten Lösung - alternativ oder auch ergänzend zu der oben beschriebenen ersten Lösung - vorgesehen sein, den Funktionsabschnitt mit zumindest einer zu dem Schenkel weisenden Leitfläche zu versehen. Die Leitfläche mündet zwischen den Schenkeln des verklankten Vertikalgliedes und dient dem Leiten des Vertikalkettengliedes in Horizontalkettengliedhöhenrichtung, respektive des Drehens des Vertikalkettengliedes, damit der Funktionsabschnitt zum Entklanken des Vertikalgliedes durch dieses selbsttätig hindurchtauchen kann. Der Funktionsabschnitt wird durch die schrägen Leitflächen durch die innere Breite des Vertikalkettenglieds nach Art einer Selbstzentrierung hindurchgefädelt.

Um ein eigenständiges Gleiten entlang der Leitfläche und damit eine Drehung des Vertikalkettengliedes um den Verlauf des Horizontalkettengliedes herum zu ermöglichen, ist vorgesehen, dass die zumindest eine Leitfläche seitens des Horizontalkettengliedes in Leitrichtung um mindestens 90° + arctan (µ) gegenüber der Richtung der Schenkellängserstreckung ausgehend von dem Funktionsabschnitt geneigt ist, wobei µ der Reibbeiwert der beiden Kettenglieder im Bereich der Abstützbahn ist. Hierdurch wird die Selbsthemmung zwischen Vertikalglied und Horizontalglied überwunden.

Bevorzugt ist vorgesehen, dass zwei Leitflächen je Funktionsabschnitt vorgesehen, die ein beidseitiges Leiten des Vertikalgliedes ermöglichen. Hierdurch wird eine Entklankungsgeometrie bereitgestellt, die unabhängig von der Drehrichtung des Vertikalkettengliedes ist.

Auch eine Kombination des Vorsehens einer weiter oben beschriebenen Abstützbahn und der beschrieben Leitflächen ist möglich und bevorzugt vorgesehen. So kann bezüglich eines ersten Abschnittes der Drehung des Vertikalkettengliedes vorgesehen sein, dass es an dem Horizontalkettenglied entlang einer um den Verlauf des Horizontalkettengliedes führenden Abstützbahn abgestützt ist und, wenn das Vertikalkettenglied mit seiner inneren Breite oberhalb der Mündung der Leitfläche ist, über die Leitflächen weiter geführt wird.

Üblicherweise ist vorgesehen, dass von einer Verklankungsanordnung, in der das Vertikalglied mit seiner Teilungsrichtung orthogonal zur Breitenrichtung des Horizontalgliedes ausgerichtet ist, in den ersten 30° - 50°, bevorzugt 35° - 45° das Vertikalglied über die Abstützbahn abgestützt ist und anschließend mittels Leitflächen über den Funktionsabschnitt geführt wird, sodass das Vertikalglied in die Zuganordnung gelangt.

Zur Ausbildung der Abstützbahn kann der Funktionsabschnitt in seinem zu dem Schenkel weisenden Abschnitt als Nase ausgebildet sein, deren Rücken bevorzugt in der Sperrebene des Funktionsabschnittes liegt. Ausgehend von dem Nasenrücken ist entlang zumindest eines Nasenflügels in einem ersten Abschnitt die Abstützbahn bereitgestellt. In der Verklankungsanordnung stützt sich das Vertikalkettenglied dann außenseitig an dem Horizontalkettenglied im Bereich der im Übergang vom Schenkel zu dem Funktionsabschnitt gebildeten Nasenwurzel ab. Zur Ausbildung der Nasenwurzel kann auch vorgesehen sein, dass das Horizontalkettenglied in seinem Querschnitt gegenüber der äußeren Breite des Funktionsabschnittes als auch des Schenkels bevorzugt gerundet konkav ausgebildet ist. Die Nasenwurzel ist üblicherweise exzentrisch zum Schenkel angeordnet, etwa in Schenkellängserstreckungsrichtung ausgehend von dem Abstützabschnitt in Richtung Bug versetzt.

Die Nasenflügel können zudem in einem zweiten Abschnitt, der üblicherweise von den Schenkeln weiter entfernt ist als der vorgenannte erste Abschnitt, als Leitflächen ausgebildet sein.

Das Horizontalkettenglied ist in Höhenrichtung bevorzugt symmetrisch ausgebildet, sodass ausgehend von dem Nasenrücken entlang beider Nasenflügel jeweils eine Abstützbahn vorgesehen ist, die in ihren Verläufen jeweils um den Verlauf des ersten Kettengliedes herumführen. Auf diese Weise kann das Vertikalkettenglied in beide Drehrichtungen entklankt werden.

Bevorzugt ist vorgesehen, dass die Nasenflügel ausgehend von dem Nasenrücken in ihrem Verlauf in Höhenrichtung des Horizontalkettengliedes in einem ersten Teil zunächst gegenüber der Höhenrichtung nur mit einem kleinen Winkel angestellt sind und anschließend in einem zweiten Teil in einem Radius in Breitenrichtung des Horizontalkettengliedes übergehen. Der erste Teil des Nasenflügels ist üblicherweise etwa 5°, bevorzugt zumindest 6° bis 10° gegenüber der Höhenrichtung des Horizontalkettengliedes angestellt. Auch kann der erste Teil des Nasenflügels als Radius ausgeformt sein, der etwa mindestens 3, bevorzugt 4 mal größer ist als der Radius im zweiten Teil. Die beiden angesprochenen Bereiche des Nasenflügels sind in Höhenrichtung bevorzugt etwa gleich breit.

Weiter bevorzugt ist vorgesehen, dass der zweite Bereich in Höhenrichtung kleiner ist als der erste Bereich. Auf diese Weise weist der Funktionsabschnitt eine Art Rippe auf, durch die der Abstützabstand im Bereich zwischen 40° und 50° von der Sperrebene des Funktionsabschnittes am größten ist. Auf diese Weise wird das Vertikalkettenglied während seiner Drehung um den Verlauf des Horizontalkettengliedes über eine großen Winkelbetrag so abgestützt, dass es ausgehend von einer Verklankungsanordnung mit seiner Teilungsrichtung quer zum Verlauf des Horizontalkettengliedes ausgerichtet bleibt, um es in dieser Ausrichtung soweit über den Funktionsabschnitt führen zu können, dass der Funktionsabschnitt durch das Vertikalkettenglied hindurchtauchen kann.

Bevorzugt ist vorgesehen, dass der Funktionsabschnitt vollständig gerundet ist. Damit weist dieser keine Kanten bzw. Ecken auf, kann durchaus aber gerade Flächen aufweisen. An kritischen Stellen, mithin Stellen, an denen das Vertikalkettenglied während einer Entklankung blockiert werden könnte, etwa durch eine zusätzliche Abstützung, ist vorgesehen, den Radius der Rundung möglichst klein zu halten, sodass der Funktionsabschnitt das Vertikalkettenglied nur in einem kleinen Bereich abstützt. Zudem ist bevorzugt vorgesehen, dass in unmittelbarer Nähe zu diesem Bereich die Tangente der Rundung so steil ist, dass zwischen Rundung des Horizontalkettengliedes und Vertikalkettenglied keine Selbsthemmung in Entklankungsrichtung herrscht.

Es kann auch vorgesehen sein, dass der Funktionsabschnitt entlang seiner ersten Richtung zu seinem distalen Ende hin sich sukzessive stärker verjüngend zuläuft. Auf diese Weise wird ein Einfädeln des Funktionsabschnittes in die innere Breite des Vertikalkettengliedes unterstützt.

Es kann ferner vorgesehen sein, dass die Abstützbahn gegenüber dem inneren Abstützabschnitt in Schenkellängserstreckungsrichtung des Horizontalkettengliedes dergestalt angeordnet ist, dass das Vertikalkettenglied um seine Teilungsachse in jeder Position verkippt abgestützt ist. Die Abstützbahn ist dann in Richtung Bug ausgehend von dem Abstützabschnitt versetzt. Hierdurch wird der Abstützkontakt zwischen Horizontalkettenglied und Vertikalkettenglied verbessert.

So kann vorgesehen sein, dass das Vertikalkettenglied in seinem Querschnitt nach innen weisend eine konvexe Kontur beschreibt, sodass der Querschnitt eine geringere Weite aufweist als die innere Breite des Vertikalkettengliedes. Bevorzugt ist die Kontur gerundet.

Durch die vorgeschlagene Entklankungsgeometrie kann der Funktionsabschnitt in von dem Schenkel wegweisende Richtung frei designt werden. So kann der Funktionsabschnitt in seiner Sperrebene über den Schenkel in seiner Breite hinausragen. Auch ist möglich, dass der Funktionsabschnitt im Wesentlichen mit dem Schenkel in Breitenrichtung fluchtet. So kann auch vorgesehen sein, dass das Horizontalkettenglied in einer Draufsicht (eine Ansicht auf die durch die Breite und Teilung aufgespannte Ebene) im Wesentlichen eine rechteckige Kontur aufweist. Die Buge können dabei auch leicht gerundet sein.

Üblicherweise ist die Sperrebene des Funktionsabschnittes im Wesentlichen quer zur Weite des Funktionsabschnittes. Der zwischen Sperrebene und der Richtung der Weite liegende Winkel, um den das Vertikalkettenglied zum Entklanken verdreht werden muss, kann jedoch auch kleiner sein, etwa 70° bis 80°. Bevorzugt ist vorgesehen, dass die Sperrebene in Breiten-Teilungsrichtung des Horizontalkettengliedes aufgespannt ist.

Bevorzugt ist vorgesehen, dass das Horizontalkettenglied an seinem Bug beidseitig entsprechende Funktionsabschnitte aufweist, die jeweils zumindest über eine, bevorzugt zwei entsprechende Abstützbahnen verfügen. Weiter bevorzugt ist vorgesehen, dass das Horizontalkettenglied symmetrisch bezüglich seines Mittelpunktes oder jedenfalls achsensymmetrisch bezüglich seiner Breitenachse ausgebildet ist. Dann weisen beide Buge Funktionsabschnitte auf.

Auch ist bevorzugt vorgesehen, dass das Vertikalkettenglied bezüglich seines Mittelpunktes oder jedenfalls bezüglich seiner Breitenachse symmetrisch ausgestaltet ist.

Durch die Entklankungsgeometrie kann ein Horizontalkettenglied bereitgestellt werden, welches jedenfalls im nach außen weisendem Bereich vollständig gerundet ist. Auch nach innen hinein ist eine vollständige Rundung möglich. Dies verhindert ein Festsetzen von Schmutz oder gefördertem Material, sodass das Kettenrad geschont wird.

Bevorzugt sind das Horizontalkettenglied und das Vertikalkettenglied aus einem Stahlwerkstoff hergestellt, etwa durch einen Schmiedeprozess.

Die Erfindung wird anhand der beiliegenden Figuren näher erläutert. Es zeigen:
- **Fig. 1:**: Eine dreidimensionale Ansicht einer erfindungsgemäßen Ketter gemäß einer ersten Ausgestaltung,
- **Fig. 2 bis 5:**: verschiedene Ansichten eines Horizontalkettengliedes der in Figur 1 gezeigten Kette und
- **Fig. 6 und 7:**: Ansichten während des Entklankungsvorganges des Vertikalkettengliedes um das Horizontalkettenglied der in Figur 1 gezeigten Kette in verschiedenen Ansichten.

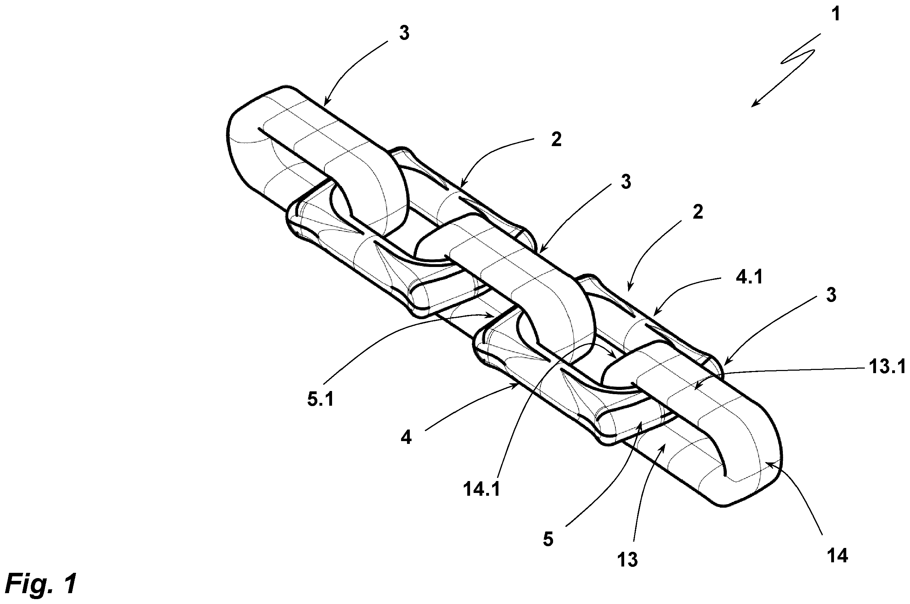

Figur 1 zeigte eine erfindungsgemäße Kette 1, gebildet durch ineinandergreifende; durch einen Schmiedeprozess hergestellte Horizontalkettenglieder 2 und Vertikalkettenglieder 3 in ihrer bestimmungsgemäßen Anordnung, der Zuganordnung. In der Ansicht der Figur 1 sind die Horizontalkettenglieder 2 in der horizontalen Ebene angeordnet, die Vertikalkettenglieder 3 in der vertikalen Ebene. In diesem Ausführungsbeispiel wird die Kette 1 auf diese Weise ausgerichtet auf das Kettenrad geführt. Das nicht näher dargestellte Kettenrad verfügt über Taschen, in die die Horizontalkettenglieder 2 eingeführt werden und durch die eine Zugkraft auf die Kette 1 eingebracht wird.

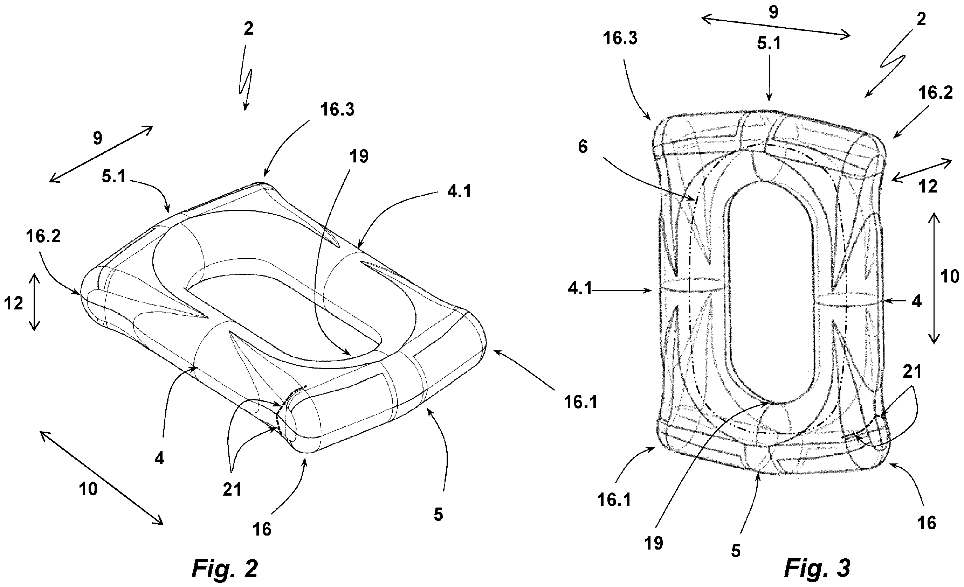

Die Horizontalkettenglieder 2 verfügen über gegenüberliegende Schenkel 4, 4.1 sowie die Schenkel 4, 4.1 miteinander verbindende Buge 5, 5.1. Auf diese Weise wird durch jedes Horizontalkettenglied 2 ein in sich geschlossener Körper bereitgestellt, der einem entsprechenden Verlauf 6 folgt. Der Verlauf 6 ist in Figur 3 gestrichelt dargestellt. Er verläuft im Wesentlichen entlang der zentralen Faser des Horizontalkettengliedes 2. Zum Einleiten der Zugkraft wirkt das nicht dargestellte Kettenrad auf die Außenseite der Buge 5 mit einer Druckkraft.

Verweisend auf die Figuren 2 bis 5 ist im Sinne der Erfindung unter der inneren Breite 7 der Abstand der beiden Schenkel 4, 4.1 zueinander und unter der äußeren Breite 8 der äußere Abstand der beiden Schenkel 4, 4.1 zueinander zu verstehen; die Breitenrichtung 9 weist somit in Abstandsrichtung der Schenkel 4, 4.1. In Schenkellängserstreckungsrichtung 10 weist der innere Abstand der beiden Buge 5, 5.1; dieser wird als Teilung 11 bezeichnet. Als Höhenrichtung 12 wird die Dicke des Horizontalkettengliedes 2 bezeichnet.

Auch das Vertikalkettenglied 3 verfügt über zwei gegenüberliegende Schenkel 13, 13.1, die durch Buge 14, 14.1 miteinander verbunden sind, sodass es ebenfalls einen geschlossenen, in den Verlauf 6 des Horizontalkettengliedes 2 eingreifenden Verlauf beschreibt.

Die Bezeichnungen des vorletzten Absatzes bezüglich des Horizontalkettengliedes 2 (Abstände und Richtungen) gelten für das Vertikalkettenglied 3 gleichermaßen.

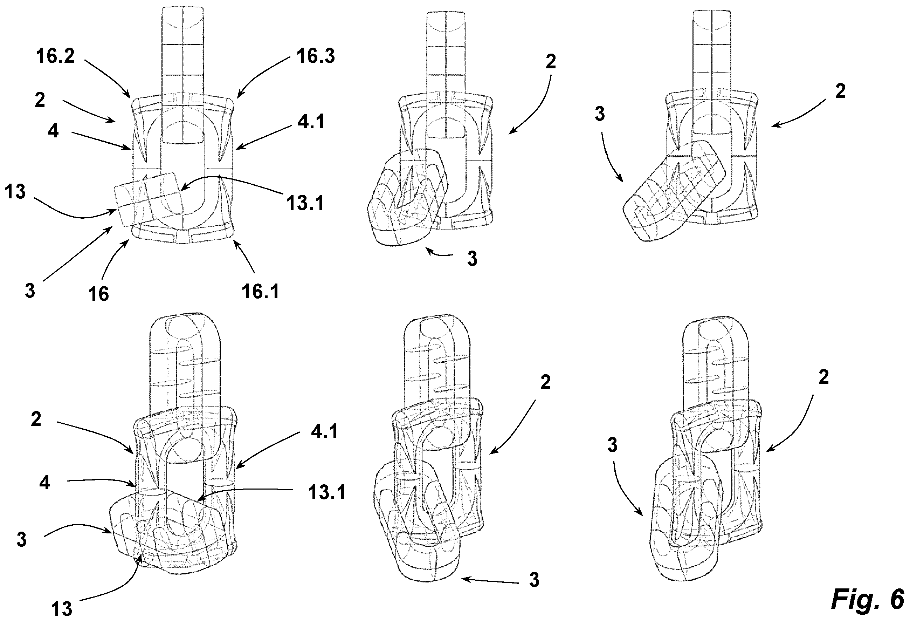

Eine nicht bestimmungsgemäße Anordnung des Vertikalkettengliedes 3 zu dem Horizontalkettenglied 2 ist die Verklankungsanordnung: Das in Figur 6 gezeigte Vertikalkettenglied 3 ist verklankt, da es in Teilungsachsenrichtung in das Horizontalkettenglied 2 eingetaucht ist und mit seinen Schenkeln 13, 13.1 die Schenkel 4, 4.1 des Horizontalkettengliedes 2 umgreift. Aus dieser Anordnung heraus kann das Vertikalkettenglied 3 nicht ohne Weiteres zurück in seine bestimmungsgemäße Anordnung, der Zuganordnung, gelangen, da das Horizontalkettenglied 2 über vier nach außen weisende, die Buge 5, 5.1 verdickende Funktionsabschnitte 16, 16.1, 16.2, 16.3 verfügt. Nachstehend wird Bezug genommen auf den in den Figuren mit Bezugszeichen 16 bezeichneten Funktionsabschnitt; die anderen Funktionsabschnitte 16.1, 16.2, 16.3 sind identisch ausgebildet.

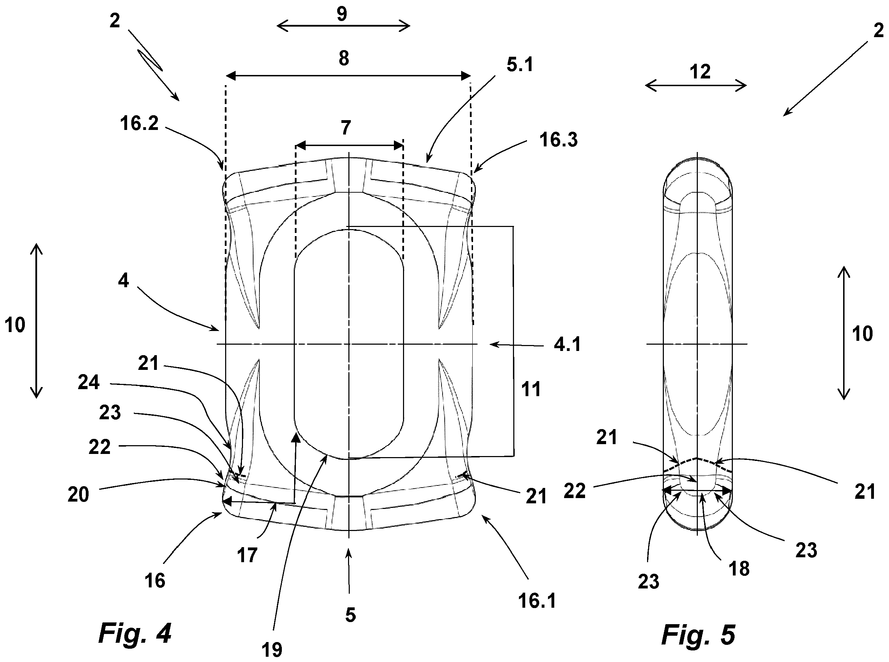

Der Funktionsabschnitt 16 ist in einer Sperrebene 17 (in Figur 4 als Vektoren dargestellt; die Sperrebene 17 ist parallel zu der in Figur 4 gezeigten Ebene) größer als die innere Breite des Vertikalkettengliedes 3. Das Vertikalkettenglied 3 kann in der in Figur 6 im ersten Schritt gezeigten Stellung nicht den Bug 5 umrunden.

Der Funktionsabschnitt 16 weist jedoch eine Weite 18 auf, die schmaler ist als die innere Breite des Vertikalkettengliedes 3. Es versteht sich somit, dass, wie in Figur 6 in der Abfolge der einzelnen Schritte angedeutet, ein Drehen des Vertikalkettengliedes 3 um den Verlauf 6 des Horizontalkettengliedes 2 dazu führt, dass das Vertikalkettenglied 3 gegenüber dem Funktionsabschnitt 16, respektive bezüglich der Sperrebene 17 und der Weite 18 des Funktionsabschnittes 16 so ausgerichtet ist, dass der Funktionsabschnitt 16 durch das Vertikalkettenglied 3 hindurchtauchen kann. Hierfür weist die Teilung des Vertikalkettengliedes 3 im Wesentlichen in Richtung der Sperrebene 17. Auf diese Weise kann, das Vertikalkettenglied 3 bezüglich des Horizontalkettengliedes 2 in seine Zuganordnung gelangen kann.

Erfindungsgemäß ist vorgesehen, dass der Funktionsabschnitt 16 in seinem zu dem Schenkel 4 weisenden Bereich so ausgestaltet ist, dass die erforderliche Drehung des Vertikalkettengliedes 3 um den Verlauf 6 des Horizontalkettengliedes 2 herum unter Belastung selbsttätig ausgeführt wird. In der in Figur 6, im ersten Schritt dargestellten Verklankungsanordnung ist das Vertikalkettenglied 3 in einem Abstützabschnitt 19 auf dem Bug 5 des Horizontalkettengliedes 2 einerseits abgestützt, andererseits auf der als Nase 20 zu dem Schenkel 4 weisenden Bereich des Funktionsabschnittes 16. Abgestützt ist das Vertikalkettenglied 3 hier auf einer Abstützbahn 21 (in den Figuren sind nur an ausgewählten Funktionsabschnitten 16, 16.1 zur Verdeutlichung die Abstützbahnen 21 eingezeichnet, wenngleich diese bei allen Funktionsabschnitten 16, 16.1, 16.2, 16.3 gleichermaßen vorgesehen sind). Die Nase 20 ist unter Berücksichtigung der Ausbildung des nach innen weisenden Teils des Vertikalkettengliedes 3 so ausgestaltet, dass sie eine um den Verlauf 6 des Horizontalkettengliedes 2 herumführende, von der Nase 20 ausgehend in Drehrichtung des Vertikalkettengliedes 3 geneigte Abstützbahn 21 bereitstellt. Die Neigung in Abstützbahnrichtung ist zumindest 90° + arctan (µ) zuzüglich einem Sicherheitswinkel von 2°-5° gegenüber der Schenkellängserstreckungsrichtung 10. Durch die Wahl dieses Winkels wird die reibungsbedingte Selbsthemmung zwischen Horizontalkettenglied 2 und Vertikalkettenglied 3 während der Drehung allein durch die in Schenkellängserstreckungsrichtung 10 weisende Kraft, etwa die Gewichtskraft des Vertikalkettengliedes 3, überwunden. Eine zusätzliche, von außen auf das Vertikalkettenglied 3 wirkende Kraft in Drehrichtung ist somit nicht notwendig. Die für die Drehung des Vertikalkettengliedes 3 erforderliche Kraft resultiert aus dem Bestreben des Vertikalkettengliedes 3, der geneigten Abstützbahn 21 zu folgen und entlang dieser hinabzugleiten in Kombination mit einer bezüglich des Horizontalkettengliedes 2 innenseitigen Abstützung in dem horizontalkettengliedseitigen Schenkelbereich.

Die Abstützbahn 21 ist in den Figuren 2 und 3 bezüglich des Horizontalkettengliedes 2 eingezeichnet. Sie wird maßgeblich durch die Geometrie des Funktionsabschnittes 16, respektive der Nase 20 bestimmt; die Geometrie des Vertikalkettengliedes 3 in seinem nach innen weisenden Teil ist hieran jedoch selbstverständlich angepasst, sodass die vorbeschriebene Funktionsweise sichergestellt ist.

Der Funktionsabschnitt 16, respektive die Nase 20 ist in diesem Ausführungsbeispiel so ausgestaltet, dass der Nasenrücken 22 der Nase 20 in der Sperrebene 17 des Funktionsabschnittes 16 liegt; in diesem Fall ist auch die Äquatorlinie des Horizontalkettengliedes 2 in dieser Ebene. Ausgehend von dem Nasenrücken 22 sind in Höhenrichtung 12 sich symmetrisch entlang des Nasenrückens 22 erstreckende Nasenflügel 23 ausgebildet. Die Nasenflügel 23 sind, wie in Figur 5 zu erkennen, in einem ersten Abschnitt ausgehend von dem Nasenrücken 22 im Wesentlichen eben ausgebildet und gehen dann in einen Radius über bis sie in den sich in Breiten- und Schenkellängserstreckungsrichtung (9, 10) erstreckenden Bereich des Horizontalkettengliedes 2 einfügen.

Zur Ausbildung einer Nasenwurzel 24 ist ein konkav zurückversetzter Bereich des Horizontalkettengliedes 2 im Übergang vom Schenkel 4 zum Bug 5 hin vorgesehen. Dieser zurückversetzte Bereich fügt sich an die Nasenflügel 23 an und ist auch mit an den den Radius aufweisenden Bereich der Nasenflügel 23 entsprechend kontinuierlich angeformt.

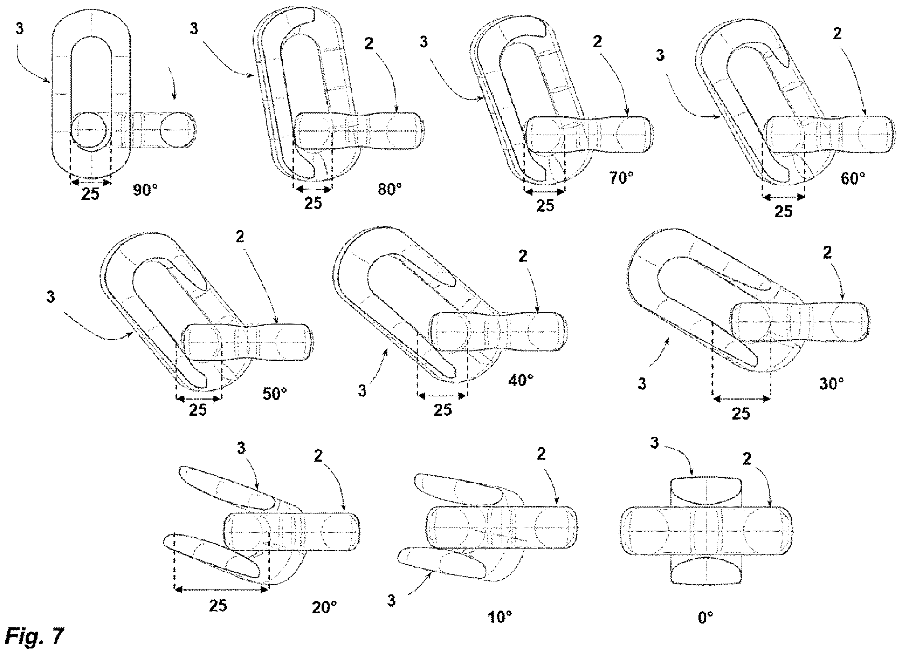

Die Drehung des Vertikalkettengliedes 3 um den Verlauf 6 des Horizontalkettengliedes 2 herum ist mehrachsig und komplex, da eine Bewegung um eine Achse aufgrund des Ineinandergreifens der beiden Kettenglieder 2, 3 Einfluss auf die Bewegung bzw. die Freiheitsgrade einer anderen Achse hat. Deutlich wird dies in den Figuren 6 und 7, die verschiedenen Stadien der Entklankung darstellen. In Figur 7 sind verschiedene Ansichten von au-ßen, auf den Bug 5 des Vertikalkettengliedes 3 in Schenkellängserstreckungsrichtung 10, wobei eine Schnittebene jeweils in den Punkt gelegt ist, in der das Vertikalkettenglied 3 und das Horizontalkettenglied 2 sich auf der außenseitigen Abstützbahn 21 kontaktieren.

Deutlich wird insbesondere in Figur 7, dass durch das Drehen des Vertikalkettengliedes 3 um den Verlauf 6 des Horizontalkettengliedes 2 die verfügbare Weite 25 in Richtung der Erstreckung der Sperrebene 17 des Funktionsabschnittes 16 kontinuierlich größer wird, nämlich ausgehend von der inneren Breite des Vertikalkettengliedes 3 bis hin zur Teilung des Vertikalkettengliedes 3.

Während des Herabwindens des Vertikalkettengliedes 3 entlang des Verlaufes 6 des Horizontalkettengliedes 2 wird während der Drehung der wirksame Abstützabstand, mithin das Verhältnis zwischen Abstützabstand (Abstand von Abstützabschnitt 19 zu Abstützbahn 21) zu der verfügbaren Weite 25 des Vertikalkettengliedes 3 in der Sperrebene 17 des Funktionsabschnittes 16, immer kleiner. Auf diese Weise wird stets eine Instabilität des Vertikalkettengliedes 3 gegenüber dem Horizontalkettenglied 2 eingebracht, sodass eine kleine weitergehende Drehbewegung energetisch günstiger für das Vertikalkettenglied 3 ist. Hierdurch wird eine eigenständige Selbstentklankung sichergestellt.

Um die erforderliche Abstützung entlang der Abstützbahn 21 über einen möglichst weiten Drehwinkel bereitzustellen, ist vorgesehen, dass die Nasenflügel 23 auch etwa ausgehend von der Mittelsenkrechten im 30 - 50 Gradwinkel noch gegenüber der Nasenwurzel 24, bzw. dem zurückversetzten Bereich nach außen hervorstehen, um eine Abstützung zu gewährleisten.

In den Figuren 6 und 7 ist zu erkennen, dass das Vertikalkettenglied 3 sukzessive über den Funktionsabschnitt 16 hinweg geführt wird: Zunächst ist es von diesem, respektive der Nase 20 an der Abstützbahn 21 abgestützt. Es versteht sich, dass ab einem bestimmten Drehwinkel die Abstützung durch die um den Verlauf 6 des Horizontalgliedes führende Abstützbahn 21 weniger wird, da in Höhenrichtung 12 des Horizontalkettengliedes 2 kein Material vorhanden sein darf, das weiter ist, als die innere Breite des Vertikalkettengliedes 3. Sobald dieser bestimmte - kritische - Drehwinkel, etwa bei 40 Grad (siehe Figur 7), erreicht ist, nickt das Vertikalkettenglied 3 nach unten, wird von der durch den Nasenflügel 23 bereitgestellten Leitfläche abgestützt und um den Funktionsabschnitt 16 herumgeleitet.

Das Vertikalkettenglied 3 ist aus einem Formstahl bereitgestellt, welcher nach innen weisend konvex ausgebildet ist, und zwar gerundet. Die Rundung erfolgt in einem solchen Maße, dass diese entlang der Höhenrichtung des Vertikalkettengliedes 3 ausgehend von der in Höhenrichtung weisenden Mantelfläche zunächst einen kleinen Radius aufweist, anschließend einen größeren bis im Bereich der Äquatorlinie abermals ein kleinerer Radius vorgesehen ist, sodass die dickste Stelle des Vertikalkettengliedes 3 an der Äquatorlinie vorgesehen ist. Die bezüglich der Äquatorlinie gegenüberliegende Geometrie ist symmetrisch ausgebildet.

Es ist vorgesehen, dass das Horizontalkettenglied 2 insgesamt gerundet ausgebildet ist, sodass stets ein Abgleiten des Vertikalkettengliedes 3 von dem Horizontalkettenglied 2 aus einer Verklankungsanordnung in eine Zuganordnung hinein ermöglicht ist. Auf diese Weise ist eine sich selbst entklankende Kette 1 bereitgestellt.

Die Erfindung ist anhand eines Ausführungsbeispiels beschrieben worden. Ohne den Schutzbereich, beschrieben durch die Ansprüche, zu verlassen, ergeben sich für den Fachmann zahlreiche weitere Ausgestaltungen, den Erfindungsgedanken zu verwirklichen, ohne dass diese im Rahmen dieser Ausführungen näher erläutert werden müssten.

### Bezugszeichenliste

- 1: Kette
- 2: Horizontalkettenglied
- 3: Vertikalkettenglied
- 4, 4.1: Schenkel des Horizontalkettengliedes
- 5, 5.1: Bug des Horizontalkettengliedes
- 6: Verlauf des Horizontalkettengliedes
- 7: innere Breite des Horizontalkettengliedes
- 8: äußere Breite des Horizontalkettengliedes
- 9: Breitenrichtung des Horizontalkettengliedes
- 10: Schenkellängserstreckungsrichtung des Horizontalkettengliedes
- 11: Teilung des Horizontalkettengliedes
- 12: Höhenrichtung des Horizontalkettengliedes
- 13, 13.1: Schenkel des Vertikalkettengliedes
- 14, 14.1: Bug des Vertikalkettengliedes
- 16, 16.1, 16.2, 16.3: Funktionsabschnitt
- 17: Sperrebene des Funktionsabschnittes
- 18: Weite des Funktionsabschnittes
- 19: Abstützabschnitt
- 20: Nase
- 21: Abstützbahn
- 22: Nasenrücken
- 23: Nasenflügel
- 24: Nasenwurzel
- 25: verfügbare Weite des Vertikalgliedes

## Patentansprüche

1. Kette (1), insbesondere für einen Förderer, umfassend ein Horizontalkettenglied (2) und ein in das Horizontalkettenglied (2) eingehängtes Vertikalkettenglied (3), die Kettenglieder (2,3) jeweils aufweisend zwei Schenkel (4, 4.1, 13, 13.1) und jeweils zwei einander gegenüberliegende, die Schenkel (4, 4.1, 13, 13.1) miteinander verbindende Buge (5, 5.1, 14, 14.1), sodass die Kettenglieder (2, 3) jeweils in sich geschlossene Verläufe (6) bilden, wobei das Horizontalkettenglied (2) an zumindest einem Bug (5, 5.1) in Verlängerung der Erstreckung eines Schenkels (4, 4.1) einen Funktionsabschnitt (16, 16.1, 16.2, 16.3) aufweist, der in einer Sperrebene (17) einerseits so ausgestaltet ist, dass er durch das zu dem Horizontalkettenglied (2) in einer ersten Ausrichtung angeordnete Vertikalkettenglied (3), einer Verklankungsanordnung, nicht hindurchtauchen kann und anderseits eine Weite (18) aufweist, die schmaler ist als die innere Breite des Vertikalkettengliedes (3), sodass er durch das zu dem Horizontalkettenglied (2) in einer zweiten Ausrichtung angeordnete Vertikalkettenglied (3) hindurchtauchen kann, **dadurch gekennzeichnet, dass** das Horizontalkettenglied (2) im nach innen weisenden Scheitelbereich seines Bugs (5, 5.1) einen inneren Abstützabschnitt (19) und an dem Funktionsabschnitt (16, 16.1, 16.2, 16.3) eine äußere, um den Verlauf (6) des Horizontalkettengliedes (2) führende Abstützbahn (21) zum Abstützen des Vertikalkettengliedes (3) bereitstellt, entlang welcher Abstützbahn (21) das Vertikalkettenglied (3) zumindest abschnittsweise aus der Verklankungsanordnung durch ein Drehen um den Verlauf (6) des Horizontalkettengliedes (2) in seine Zuganordnung gleiten kann und welche Abstützbahn (21) in Abstützbahnrichtung um mindestens 90° + arctan (µ) gegenüber der Richtung der Schenkellängserstreckung (10) ausgehend von dem Funktionsabschnitt (16, 16.1, 16.2, 16.3) geneigt ist, wobei µ der Reibbeiwert der beiden Kettenglieder (2, 3) im Bereich der Abstützbahn (21) ist, sodass sich das Vertikalkettenglied (3) selbsttätig von der Verklankungsansordnung so um das Horizontalkettenglied (2) dreht, dass es sich mit der Richtung der inneren Breite (7) parallel zur Richtung der Weite (18) des Funktionsabschnittes (16, 16.1, 16.2, 16.3) ausrichtet, sodass der Funktionsabschnitt (16, 16.1, 16.2,16.3) durch das Vertikalkettenglied (3) hindurchtaucht und das Vertikalkettenglied (2) in seine Zuganordnung gelangt.

2. Kette nach dem Oberbegriff des Anspruchs 1, insbesondere nach Anspruch 1, **dadurch gekennzeichnet, dass** an dem Funktionsabschnitt (16, 16.1, 16.2, 16.3) zumindest eine Leitfläche zum Abstützen des Vertikalkettengliedes (3) bereitgestellt ist, welche Leitfläche in der Verklankungsanordnung innerhalb der inneren Breite des Vertikalkettengliedes (3) mündet und das Vertikalkettenglied (3) in Höhenrichtung (12) des Horizontalkettengliedes (2) führt, sodass das Vertikalkettenglied (3) von einer Verklankungsanordnung durch ein Drehen um den Verlauf (6) des Horizontalkettengliedes (2) in seine Zuganordnung gleitet und welche Leitfläche in Leitrichtung um mindestens 90° + arctan (µ) gegenüber der Richtung der Schenkellängserstreckung (10) ausgehend von dem Funktionsabschnitt (16, 16.1, 16.2, 16.3) geneigt ist, wobei µ der Reibbeiwert der beiden Kettenglieder (2, 3) im Bereich der Leitfläche ist, sodass sich das Vertikalkettenglied (3) selbsttätig von der Verklankungsansordnung so um das Horizontalkettenglied (2) dreht, dass es sich mit seiner inneren Breitenrichtung parallel zur Weitenrichtung (18) des Funktionsabschnittes (16, 16.1, 16.2, 16.3) ausrichtet und so in seine Zuganordnung gelangt.

3. Kette nach einem der Ansprüche 1 oder 2, **dadurch gekennzeichnet, dass** die Sperrebene (17) des Funktionsabschnittes (16, 16.1, 16.2, 16.3) in Breitenrichtung (9) des Horizontalkettengliedes (2) weist.

4. Kette nach einem der Ansprüche 1 bis 3, **dadurch gekennzeichnet, dass** die Weite (18), die der Funktionsabschnitt (16, 16.1, 16.2, 16.3) aufweist, damit dieser durch das Vertikalkettenglied (3) durchtauchen kann, etwa quer zur Sperrebene (17) weist.

5. Kette nach einem der Ansprüche 1 bis 4, **dadurch gekennzeichnet, dass** die Abstützbahn (21) eine knickfreie Bahn ist.

6. Kette nach einem der Ansprüche 1 bis 5, **dadurch gekennzeichnet, dass** der Funktionsabschnitt (16, 16.1, 16.2, 16.3) als Nase (20) ausgebildet ist, deren Nasenrücken (22) in der Sperrebene (17) des Funktionsabschnittes (16, 16.1, 16.2, 16.3) liegt und ausgehend von dem Nasenrücken (22) zwei Abstützbahnen (21) entlang der Nasenflügel (23) beidseitig um den Verlauf (6) des Horizontalkettengliedes (2) herumgeführt sind.

7. Kette nach Anspruch 6, **dadurch gekennzeichnet, dass** zumindest ein Nasenflügel (23) ausgehend von dem Nasenrücken (22) zunächst gegenüber der Höhenrichtung (12) des Horizontalkettengliedes (2) nur mit einem kleinen Winkel angestellt ist und anschließend in Breitenrichtung (9) in einen Radius übergeht.

8. Kette nach einem der Ansprüche 1 bis 7, **dadurch gekennzeichnet, dass** der Funktionsabschnitt (16, 16.1, 16.2, 16.3) entlang seiner Sperrebene (17) zu seinem distalen Ende hin sich sukzessive stärker verjüngend zulaufend ausgebildet ist.

9. Kette nach einem der Ansprüche 1 bis 8, **dadurch gekennzeichnet, dass** die Abstützbahn (21) gegenüber dem inneren Abstützabschnitt (19) in Schenkellängserstreckungsrichtung (10) des Horizontalkettengliedes (2) dergestalt angeordnet ist, dass das Vertikalkettenglied (3) um seine Teilungssachse (11) verkippt abgestützt ist.

10. Kette nach einem der Ansprüche 1 bis 9, **dadurch gekennzeichnet, dass** das Horizontalkettenglied (2) zur Ausbildung der Abstützbahn (21) in seinem Querschnitt gegenüber der äußeren Breite (8) des Schenkels (5, 5.1) konkav zurückversetzt ist.

11. Kette nach einem der Ansprüche 1 bis 10, **dadurch gekennzeichnet, dass** das Vertikalkettenglied (3) in seinem Querschnitt nach innen weisend eine konvexe Kontur beschreibt.

12. Kette nach einem der Ansprüche 1 bis 11, **dadurch gekennzeichnet, dass** der Funktionsabschnitt (16, 16.1, 16.2, 16.3) in seiner Sperrebene (17) über die äußere Breite (8) der Schenkel (4, 4.1) hinausragt, insbesondere in Breitenrichtung (9) des Horizontalkettengliedes (2).

13. Kette nach einem der Ansprüche 1 bis 12, **dadurch gekennzeichnet, dass** der Bug (5, 5.1) des Horizontalkettengliedes (2) beidseitig entsprechende Funktionsabschnitte (16, 16.1, 16.2, 16.3) aufweist, die beide über Abstützbahnen (21) verfügen.

14. Kette nach einem der Ansprüche 1 bis 13, **dadurch gekennzeichnet, dass** das Horizontalkettenglied (2) jedenfalls im nach außen weisenden Bereich vollständig gerundet ausgeführt ist.
